(19)

Europäisches
Patentamt
European
Patent Office
Office européen
des brevets

(11)　**EP 3 553 296 A1**

(12)　**EUROPEAN PATENT APPLICATION**
published in accordance with Art. 153(4) EPC

(43) Date of publication:
**16.10.2019 Bulletin 2019/42**

(21) Application number: **17880601.4**

(22) Date of filing: **14.09.2017**

(51) Int Cl.:
*F02D 21/08* ^(2006.01)　　*F02D 45/00* ^(2006.01)
*F02M 26/74* ^(2016.01)

(86) International application number:
**PCT/JP2017/033189**

(87) International publication number:
**WO 2018/110010 (21.06.2018 Gazette 2018/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2016 JP 2016240112**

(71) Applicant: **IHI Agri-Tech Corporation
Chitose-shi, Hokkaido 066-8555 (JP)**

(72) Inventors:
• **MASHIMA, Yutaka
Matsumoto-shi
Nagano 390-8714 (JP)**
• **KIJIMA, Etsuo
Matsumoto-shi
Nagano 390-8714 (JP)**

• **MORII, Yasuhiko
Matsumoto-shi
Nagano 390-8714 (JP)**
• **NAKAGAWA, Jun
Matsumoto-shi
Nagano 390-8714 (JP)**
• **ITOU, Tomohiro
Matsumoto-shi
Nagano 390-0817 (JP)**
• **ISHIMOTO, Mitsuru
Matsumoto-shi
Nagano 390-0817 (JP)**
• **KAWAAI, Yuichi
Matsumoto-shi
Nagano 390-8714 (JP)**

(74) Representative: **Plougmann Vingtoft a/s
Strandvejen 70
2900 Hellerup (DK)**

(54)　**DIESEL ENGINE, AND METHOD OF CONTROLLING VEHICLE AND DIESEL ENGINE**

(57)　This diesel engine (10) has an engine body (11), an EGR device (12), and a control unit (13). The engine body (11) has combustion chambers (15) and injectors (16). The EGR device (12) is provided with: a gas flow path (35) that returns a portion of exhaust gas from the combustion chambers (15) to an intake flow path (17); and an EGR device (37) that has a butterfly valve (42). When the butterfly valve (42) is set to a rotation angle position of 0 ° when in a closed posture (42A), the control unit (13) drives the butterfly valve (42) within a first rotation angle range of no less than 0 ° when the injection amount of fuel to be injected by the injectors (16) is no less than a predetermined threshold, and the control unit (13) drives the butterfly valve (42) within a second rotation angle range that passes through 0° when the injection amount is less than the threshold. The threshold is a value greater than zero.

FIG.2

EP 3 553 296 A1

## Description

Field

The present invention relates to a diesel engine including an engine main member including a combustion chamber, and an exhaust gas recirculation (EGR) device. The present invention also relates to a vehicle including the diesel engine, and a method for controlling the diesel engine.

Background

The diesel engine includes an EGR device to suppress emission of NOx (nitrogen oxide) included in exhaust gas discharged from the combustion chamber. The EGR device includes a gas channel returning part of exhaust gas from the combustion chamber as a reflux gas to the intake side of the combustion chamber, and an EGR valve to control the flowrate of the reflux gas. The EGR valve includes a butterfly valve disposed in the gas channel.

Non-combusted fuel included in the reflux gas, engine oil, and/or soot adhere as deposits to the wall surface of the gas channel. In this state, when the deposits solidify on the wall surface of the gas channel, the deposits may interfere with the butterfly valve and prevent smooth opening/closing operations of the butterfly valve. To avoid such a problem, in the EGR device of Patent Literature 1, when the engine is stopped, a deposit removal operation is performed to remove the deposits adhering to the wall surface portion of the gas channel. In the deposit removal operation, the butterfly valve is rotated to both sides holding the fully closed position thereof held therebetween. In this manner, the deposits adhering to the wall surface portion of the gas channel is scraped off with the butterfly valve.

Citation List

Patent Literature

Patent Literature 1: Japanese Patent Application Laid-open No. 2003-314377

Summary

Technical Problem

In Patent Literature 1, the deposit removal operation is performed when the engine is stopped. Accordingly, when the engine is driven for a long time, the deposits solidify during the operation of the engine, and the solidified deposits may interfere with the butterfly valve to obstruct opening and closing of the butterfly valve. For example, when soot deposits and solidifies between the wall surface of the gas channel and the butterfly valve, the soot causes the problem that the solidified soot interferes with the butterfly valve, and the butterfly valve is prevented from being placed in the fully closed position.

In view of such a point, an object of the present invention is to present a diesel engine, a vehicle, and a method for controlling the diesel engine capable of preventing or suppressing occurrence of malfunction in the opening/closing operations of the butterfly valve disposed in the gas channel of the reflux gas during an operation of the engine.

Solution to Problem

To solve the problem described above, the present invention provides a diesel engine comprising: an engine main member including a combustion chamber, an injector injecting fuel to the combustion chamber, and an intake channel supplying air to the combustion chamber; and an EGR device including a gas channel returning part of exhaust gas from the combustion chamber as reflux gas to the intake channel, and a butterfly valve disposed in a flowrate regulating position set in a middle of the gas channel, the diesel engine further comprising: a controller acquiring injection quantity of fuel injected with the injector and driving the butterfly valve, wherein the controller drives the butterfly valve in a first rotation angle range of 0° or more when the injection quantity is equal to or larger than a predetermined threshold, and drives the butterfly valve in a second rotation angle range extending through 0° when the injection quantity is smaller than the threshold, where 0° is a rotation angle position of the butterfly valve at the time when the butterfly valve is in a closed posture orthogonal to a circulation direction of the reflux gas, and the threshold is a value larger than zero.

According to the present invention, when the injection quantity of the fuel injected from the injector to the combustion chamber is smaller than the threshold, the butterfly valve is driven in the second rotation angle range extending through 0°. In this state, when the butterfly valve is driven in the second rotation angle range, the butterfly valve is enabled to rotate to pass through 0° between a minus angle position with respect to 0° and a plus angle position with respect to 0°. This structure enables the deposit removal operation to scrape off the deposits adhering to the wall surface of the gas channel with the butterfly valve in the flowrate regulating position. In addition, because the threshold is a value larger than zero, the deposit removal operation is performed during driving of the engine main member. For this reason, even when the driving time of the engine main member is long, this structure prevents the deposits adhering to the wall surface portion of the gas channel during driving of the engine main member from solidifying and interfering with the butterfly valve to obstruct opening and closing of the butterfly valve.

In the present invention, it is preferable that the diesel engine further comprises a detector detecting rotation speed of the engine main member, wherein the controller drives the butterfly valve between a minus rotation angle position with respect to 0° and a plus rotation angle position with respect to 0° to pass through 0° based on change quantity of the rotation speed, when the rotation speed changes in a state in which the injection quantity is smaller than the threshold. With this structure, the deposit removal operation is performed when the rotation speed of the engine main member changes in the state in which the injection quantity of the fuel injected with the injector is smaller than the threshold.

In the present invention, it is preferable that the controller drives the butterfly valve between the minus rotation angle position with respect to 0° and the plus rotation angle position with respect to 0° to pass through 0° based on change quantity of the injection quantity, when the injection quantity changes in the state in which the injection quantity is smaller than the threshold. This structure enables execution of the deposit removal operation when the injection quantity changes, even when the rotation speed of the engine main member is fixed, in the state in which the injection quantity of the fuel injected with the injector is smaller than the threshold.

In the present invention, it is preferable that the diesel engine further comprises a storage unit storing and retaining therein the injection quantity, the rotation speed, and a target rotation angle position in which the butterfly valve is to be placed, in a form of associating with each other, wherein when the controller drives the butterfly valve, the controller acquires the target rotation angle position with reference to the storage unit based on the injection quantity and the rotation speed to place the butterfly valve in the target rotation angle position. This structure enables easy drive and control of the butterfly valve with the controller.

In the present invention, the controller may drive the butterfly valve between a minus rotation angle position with respect to 0° and a plus rotation angle position with respect to 0° to pass through 0° based on change quantity of the injection quantity, when the injection quantity changes in a state in which the injection quantity is smaller than the threshold. This structure enables execution of the deposit removal operation when the injection quantity changes in the state in which the injection quantity of the fuel injected with the injector is smaller than the threshold.

In the present invention, it is preferable that the diesel engine further comprises: a detector detecting rotation speed of the engine main member; and a storage unit storing and retaining therein the injection quantity, the rotation speed, and a target rotation angle position in which the butterfly valve is to be placed, in a form of associating with each other, wherein when the controller drives the butterfly valve, the controller acquires the target rotation angle position with reference to the storage unit based on the injection quantity and the rotation speed to place the butterfly valve in the target rotation angle position. This structure enables easy drive and control of the butterfly valve with the controller.

The present invention may be a vehicle including the diesel engine described above.

According to the present invention, while the diesel engine (engine main member) of the vehicle is driven, the deposit removal operation is performed in the gas channel of the EGR device. This structure prevents or suppresses occurrence of malfunction in the opening/closing operations of the butterfly valve regulating the flowrate of the reflux gas. This structure maintains the effect of suppressing discharge of nitride oxygen included in the exhaust gas during the operation of the engine main member.

In addition, the present invention is a method for controlling a diesel engine including an engine main member including a combustion chamber, an injector injecting fuel to the combustion chamber, and an intake channel supplying air to the combustion chamber, and an EGR device including a gas channel returning part of exhaust gas from the combustion chamber as reflux gas to the intake channel, and a butterfly valve disposed in a flowrate regulating position set in a middle of the gas channel, the method comprising: driving the butterfly valve in a first rotation angle range of 0° or more when injection quantity of fuel injected with the injector is equal to or larger than a predetermined threshold, and driving the butterfly valve in a second rotation angle range extending through 0° when the injection quantity is smaller than the threshold, where 0° is a rotation angle position of the butterfly valve at the time when the butterfly valve is in a closed posture orthogonal to a circulation direction of the reflux gas, wherein the threshold is a value larger than zero.

According to the present invention, when the injection quantity of the fuel injected from the injector to the combustion chamber is smaller than the threshold, the butterfly valve is driven in the second rotation angle range extending through 0°. In this state, when the butterfly valve is driven in the second rotation angle range, the butterfly valve is enabled to rotate to pass through 0° between a minus angle position with respect to 0° and a plus angle position with respect to 0°. This structure enables execution of the deposit removal operation to scrape off the deposits adhering to the wall surface of the gas channel with the butterfly valve in the flowrate regulating position. In addition, because the threshold is a value larger than zero, the deposit removal operation is performed during driving of the engine main member. For this reason, even when the driving time of the engine main member is long, this structure prevents the deposits adhering to the wall surface portion of the gas channel during driving of the engine main member from solidifying and interfering with the butterfly valve to obstruct opening and closing of the butterfly valve.

In the present invention, it is preferable that the diesel engine further includes a detector detecting rotation speed of the engine main member, and the butterfly valve is driven between a minus rotation angle position with respect to 0° and a plus rotation angle position with respect to 0° to pass through 0° based on change quantity of the rotation speed, when the rotation speed changes in a state in which the injection quantity is smaller than the threshold. This structure enables execution of the deposit removal operation when the rotation speed of the engine main member changes, in the state in which the injection quantity of the fuel injected with the injector is smaller than the threshold.

In the present invention, it is preferable that the driving includes driving the butterfly valve between the minus rotation angle position with respect to 0° and the plus rotation angle position with respect to 0° to pass through 0° based on change quantity of the injection quantity, when the injection quantity changes in the state in which the injection quantity is smaller than the threshold. This structure enables execution of the deposit removal operation when the injection quantity changes, even when the rotation speed of the engine main member is fixed, in the state in which the injection quantity of the fuel injected with the injector is smaller than the threshold.

In the present invention, it is preferable that the method further comprises: storing and retaining, in a storage unit, the injection quantity, the rotation speed, and a target rotation angle position in which the butterfly valve is to be placed, in a form of associating with each other, wherein when the butterfly valve is driven, the target rotation angle position is acquired with reference to the storage unit based on the injection quantity and the rotation speed placing the butterfly valve in the target rotation angle position. This structure enables easy driving of the butterfly valve.

In the present invention, the butterfly valve is driven between a minus rotation angle position with respect to 0° and a plus rotation angle position with respect to 0° to pass through 0° based on change quantity of the injection quantity, when the injection quantity changes in a state in which the injection quantity is smaller than the threshold. This structure enables execution of the deposit removal operation when the injection quantity changes, in the state in which the injection quantity of the fuel injected with the injector is smaller than the threshold.

In the present invention, it is preferable that the diesel engine further includes a detector detecting rotation speed of the engine main member, the method further comprises storing and retaining therein the injection quantity, the rotation speed, and a target rotation angle position in which the butterfly valve is to be placed, in a form of associating with each other, wherein when the butterfly valve is driven, the target rotation angle position is acquired with reference to the storage unit based on the injection quantity and the rotation speed to place the butterfly valve in the target rotation angle position. This structure enables easy driving of the butterfly valve.


Advantageous Effects of Invention

According to the present invention, during an operation of the diesel engine (engine main member), a deposit removal operation is performed in the gas channel of the EGR device. This structure prevents or suppresses occurrence of malfunction of the opening/closing operations of the butterfly valve regulating the flowrate of the reflux gas. This structure maintains the effect of suppressing discharge of a nitride oxide included in the exhaust gas during the operation of the engine main member. Brief Description of Drawings

FIG. 1 is a side view of a tractor to which the present invention is applied;
FIG. 2 is an explanatory drawing of a diesel engine mounted on the tractor of FIG. 1;
FIG. 3 is an explanatory drawing of an EGR valve;
FIG. 4 is an explanatory drawing of operations of a butterfly valve;
FIG. 5 is an explanatory drawing of a deposit removal operation;
FIG. 6 is an explanatory drawing of a table referred to with an EGR device controller;
FIG. 7 is a flowchart of opening/closing operations of the butterfly valve;
FIG. 8 is a flowchart of an operation of driving and controlling the butterfly valve with the EGR device controller;
FIG. 9 is a graph illustrating change in rotation speed of an engine main member of the tractor, change in injection quantity, and change in rotation angle position of the butterfly valve;
FIG. 10 is an explanatory drawing of a table referred to with the EGR device controller according to Modification 1 ;
FIG. 11 is a flowchart of the opening/closing operations of the butterfly valve according to Modification 1;
FIG. 12 is a graph illustrating change in rotation speed of the engine main member of the tractor, change in injection quantity, and change in rotation angle position of the butterfly valve according to Modification 1;
FIG. 13 is an explanatory drawing of a table referred to with the EGR device controller according to Modification 2;
FIG. 14 is a flowchart of the opening/closing operations of the butterfly valve according to Modification 2; and
FIG. 15 is an explanatory drawing of a power generator unit including the diesel engine according to the present invention.

## Description of Embodiments

The following is an explanation of a tractor serving as an embodiment of a vehicle to which the present invention is applied, with reference to drawings.

## Tractor

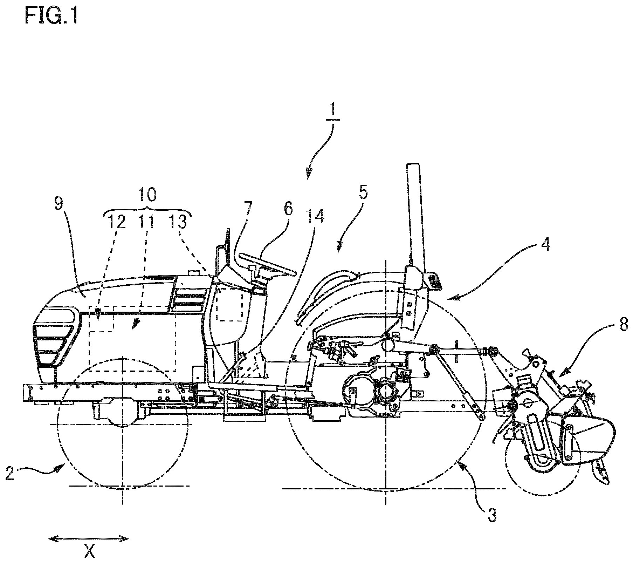

FIG. 1 is a side view of a tractor serving as a vehicle to which the present invention is applied. In FIG. 1, a front wheel and a rear wheel are indicated with two-dot chain lines. As illustrated in FIG. 1, a tractor 1 (vehicle) according to the present example includes a traveling vehicle body 4 supported with front wheels 2 and rear wheels 3. A seat portion 5 on which the operator rides is provided in a center portion of the traveling vehicle body 4 in a longitudinal direction X thereof. The seat portion includes a handle 6, an acceleration lever 7, and a clutch pedal 14. A rotary cultivator 8 is attached to the rear portion of the traveling vehicle body 4. A hood 9 is provided in front of the seat portion 5. A diesel engine 10 is contained inside the hood 9. The diesel engine 10 includes an engine main member 11, an exhaust gas recirculation (EGR) device 12 provided as one unitary piece with the engine main member 11, and a control unit 13 (controller) driving and controlling the engine main member 11 and the EGR device 12. Output (rotation) from the engine main member 11 is transmitted to the front wheels 2, the rear wheels 3, and the rotary cultivator 8 through a clutch (not illustrated) and a transmission (not illustrated), and the like. A mower, such as a flail mower, may be attached to the traveling vehicle body 4.

## Engine Main Member

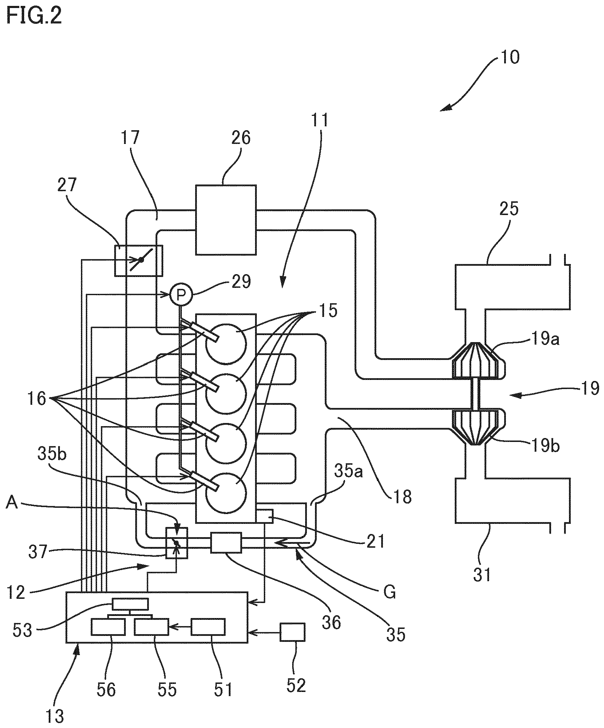

FIG. 2 is an explanatory drawing of the diesel engine 10. In the present example, the engine main member 11 is a four-cylinder engine. The engine main member 11 includes four combustion chambers 15, four injectors 16 injecting fuel into the respective combustion chambers 15, an intake channel 17 to supply air to each of the combustion chambers 15, an exhaust channel 18 to discharge exhaust gas from each of the combustion chambers 15, and a turbocharger 19. An engine rotation sensor 21 (detector) is attached to the engine main member 11. The engine rotation sensor 21 detects the rotation speed of a crankshaft (not illustrated) as the rotation speed of the engine main member 11.

An air cleaner 25 is attached to the intake channel 17. In the intake channel 17, a compressor 19a of the turbocharger 19, an intercooler 26, and a throttle valve 27 are installed in this order from the upstream side to the downstream side in the circulation direction of the air going from the air cleaner 25 to the combustion chambers 15. The injectors 16 are connected with a fuel tank (not illustrated) through a fuel supply pump 29. When fuel is injected from the respective injectors 16 to the respective combustion chambers 15, a mixture gas of the air and the fuel supplied to each of the combustion chambers 15 through the intake channel 17 is combusted in each of the combustion chambers 15 to rotate the crankshaft. In the exhaust channel 18, a turbine 19b of the turbocharger 19 and an exhaust gas treatment device 31 are installed in this order from the upstream side to the downstream side in the circulation direction of the exhaust gas.

## EGR Device

The EGR device 12 includes a gas channel 35 connecting the exhaust channel 18 and the intake channel 17. A gas inflow port 35a of the gas channel 35 is positioned between the combustion chambers 15 and the turbine 19b of the turbocharger 19, in the exhaust channel 18. A gas outflow port 35b of the gas channel 35 is positioned between the throttle valve 27 and the combustion chambers 15, in the intake channel 17. The gas channel 35 returns part of the exhaust gas from the engine main member 11 as reflux gas G to the intake channel 17.

The EGR 12 also includes an EGR cooler 36 and an EGR valve 37 installed in the gas channel 35. The EGR valve 37 is installed in a flowrate regulating position A set between the EGR cooler 36 and the gas outflow port 35b. The EGR valve 37 regulates the reflux quantity of the exhaust gas refluxed from the exhaust channel 18 to the intake channel 17, that is, circulation quantity of the reflux gas G.

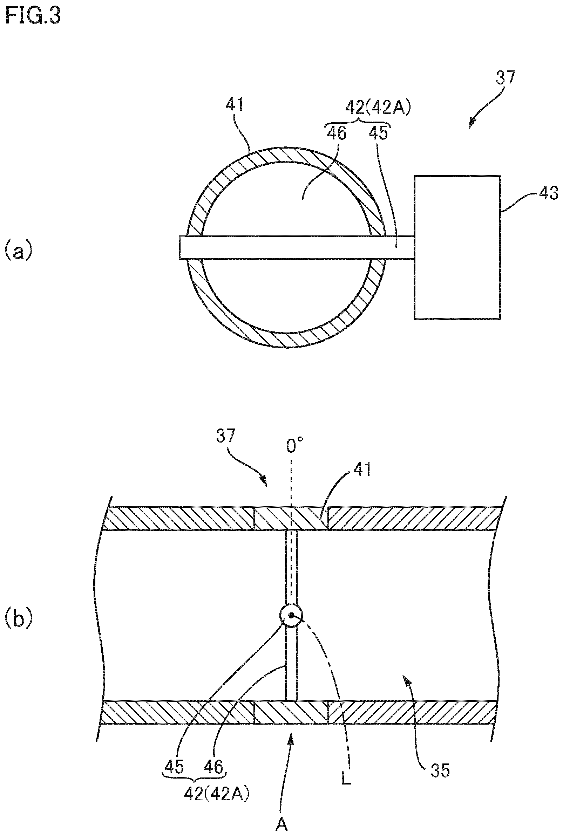

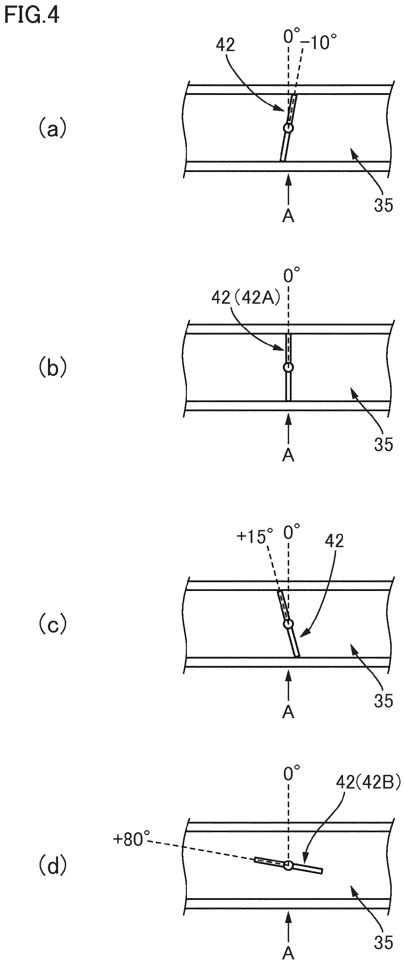

FIG. 3 is an explanatory drawing of the EGR valve 37. FIG. 3 (a) illustrates the EGR valve 37 as viewed in the circulation direction of the reflux gas G, and FIG. 3 (b) illustrates the EGR valve 37 as viewed in a direction orthogonal to the circulation direction of the reflux gas G. FIG. 4 is an explanatory drawing of a state in which the butterfly valve is driven. FIG. 4 (a) illustrates a state in which the butterfly valve is placed in a maximum rotation angle position of -10°, FIG. 4 (b) illustrates a state in which the butterfly valve is placed in a rotation angle position of 0°, FIG. 4 (c) illustrates a state in which the butterfly valve is placed in a rotation angle position of +15°, and FIG. 4 (d) illustrates a state in which the butterfly valve is placed in a rotation angle position of +80°.

As illustrated in FIG. 3 (a), the EGR valve 37 includes a cylindrical housing 41, a butterfly valve 42, and a drive unit 43 driving the butterfly valve 42. As illustrated in FIG. 3 (b), the housing 41 forms part of the gas channel 35 in the flowrate regulating position A. The butterfly valve 42 opens and closes the gas channel 35 in the flowrate regulating position A. The butterfly valve 42 includes a valve bar 45 and a valve member 46 having a circular plate shape connected with the valve bar 45. The valve bar 45 is connected with the drive unit 43 provided outside the housing 41. The drive unit 43 rotates the valve bar 45 to rotate the valve member 46 around an axis line L of the valve bar 45.

As illustrated in FIG. 3 (b) and FIG. 4 (b), the butterfly valve 42 closes the gas channel 35, with a closed posture 42A orthogonal to the circulation direction of the reflux gas G flowing through the flowrate regulating position A. The butterfly valve 42 rotates in a predetermined rotation angle range extending through 0°, when the rotation angle position of the butterfly valve 42 in the closed posture 42A is 0°. Specifically, the butterfly valve 42 rotates between a minus-side maximum rotation angle position located on the minus side of 0° and a plus-side maximum rotation angle position located on the plus side of 0°. In the present example, the minus-side maximum rotation angle position is -10° illustrated in FIG. 4 (a), and the plus-side maximum rotation angle position is +80° illustrated in FIG. 4 (d). The posture of the butterfly valve 42 when the butterfly valve 42 is placed in the plus-side maximum rotation angle position (+80°) is an opened posture 42B with which the butterfly valve 42 fully opens the gas channel 35.

When the butterfly valve 42 is placed in a rotation angle position separated from 0°, part (reflux gas G) of the exhaust gas in the exhaust channel 18 flows into the gas channel 35 from the gas inflow port 35a, and is refluxed into the intake channel 17 through the EGR cooler 36, the flowrate regulating position A, and the gas outflow port 35b in this order.

Control System

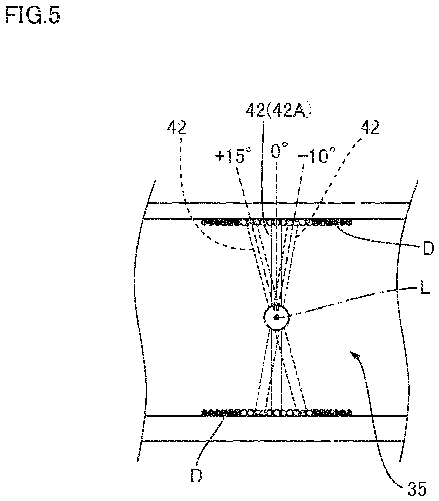

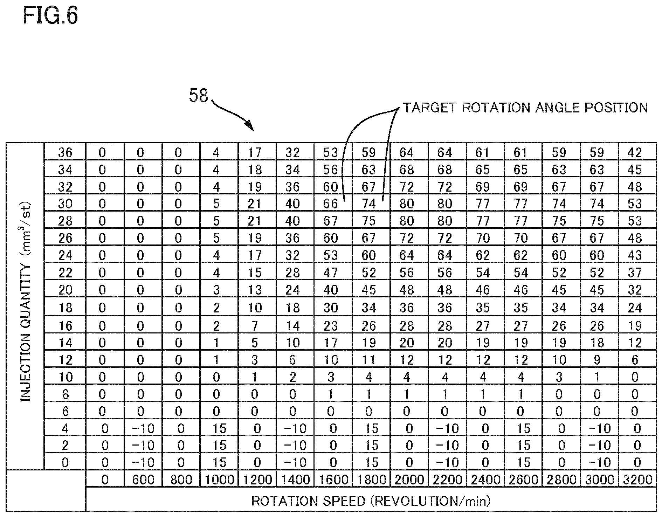

The following is an explanation of the control system of the diesel engine 10 with reference to FIG. 2, FIG. 5, and FIG. 6. FIG. 5 is an explanatory drawing of the deposit removal operation. FIG. 6 is an explanatory drawing of a table stored and retained in a storage unit. The control system of the diesel engine 10 is mainly formed of a control unit 13 including a CPU, a ROM, and a RAM, and the like. As illustrated in FIG. 2, the input side of the control unit 13 is connected with an acceleration aperture sensor 52 detecting an operating position (aperture) of the acceleration lever 7 and the engine rotation sensor 21.
The output side of the control unit 13 is connected with the throttle valve 27, the fuel supply pump 29, the injectors 16, and the EGR valve 37.

The control unit 13 includes a storage unit 53. The control unit 13 functions as a target rotation speed output unit 51, an engine main member controller 55, and an EGR device controller 56, by reading the computer program stored and retained in the ROM to the RAM to operate. Accordingly, the control unit 13 includes the target rotation speed output unit 51, the engine main member controller 55, and the EGR device controller 56. Each of the target rotation speed output unit 51, the engine main member controller 55, and the EGR device controller 56 may be independent as a control member including a CPU, a ROM, and a RAM, and the like, and they may form the control unit 13 as a whole.

The target rotation speed output unit 51 acquires the target rotation speed of the engine main member 11 based on the aperture of the acceleration lever 7 output from the acceleration aperture sensor 52. The target rotation speed output unit 51 also inputs the acquired target rotation speed to the engine main member controller 55.

The engine main member controller 55 controls the aperture of the throttle valve 27, the driving of the fuel supply pump 29, the injection quantity of the fuel injected with each of the injectors 16 at a time, and the timing of fuel injection of each of the injectors 16 based on the target rotation speed input from the target rotation speed output unit 51 and the rotation speed of the engine main member 11 input from the engine rotation sensor 21 to the control unit 13. In this operation, when the engine main member controller 55 controls the injection quantity of the fuel from each of the injectors 16, first, the engine main member controller 55 acquires the target injection quantity of the fuel to be injected from each of the injectors 16 based on the target rotation speed and the rotation speed of the engine main member 11, and the like. Thereafter, the engine main member controller 55 drives the injectors 16 to cause the fuel of the target injection quantity from each of the injectors 16. In acquisition of the target injection quantity, the engine main member controller 55 increases and decreases the target injection quantity such that the rotation speed of the engine main member 11 agrees with the target rotation speed. More specifically, the engine main member controller 55 increases the target injection quantity when the rotation speed of the engine main member 11 is lower than the target rotation speed, and decreases the target injection quantity when the rotation speed of the engine main member 11 is higher than the target rotation speed.

The EGR device controller 56 acquires the injection quantity of the fuel injected with each of the injectors 16. In the present example, the EGR device controller 56 acquires the target injection quantity acquired with the engine main member controller 55, as the injection quantity of the fuel injected with each of the injectors 16. The EGR device controller 56 also acquires the rotation speed of the engine main member 11 input from the engine rotation sensor 21 to the control unit 13. In addition, the EGR device controller 56 drives the butterfly valve 42 based on the acquired injection quantity and the acquired rotation speed, to regulate the rotation angle position of the butterfly valve 42 in the flowrate regulating position A.

More specifically, when the injection quantity acquired from the engine main member controller 55 is equal to or larger than a predetermined threshold, the EGR device controller 56 drives the butterfly valve 42 in a first rotation angle range of 0° or more based on the injection quantity and the rotation speed. In this manner, the circulation quantity of the reflux gas G is regulated, and the quantity of NOx included in the exhaust gas discharged from the diesel engine 10 to the outside is reduced to a quantity equal to or smaller than a predetermined reference value. In the present example, the threshold is 6 mm$^3$/st. The first rotation angle range is a range extending from 0° illustrated in FIG. 4 (b) to +80° (plus-side maximum rotation angle position) illustrated in FIG. 4 (d).

In addition, when the injection quantity acquired from the engine main member controller 55 is smaller than the threshold, the EGR device controller 56 drives the butterfly valve 42 in a second rotation angle range extending through 0°. In the present example, the second rotation angle range is a range extending from +15° illustrated in FIG. 4 (c) to -10° (minus-side maximum rotation angle position) illustrated in FIG. 4 (a). The plus-side upper limit of the second rotation angle range is a rotation angle position smaller than that of the first rotation angle range.

In addition, the EGR device controller 56 rotates the butterfly valve 42 between a minus rotation angle position with respect to 0° and a plus rotation angle position with respect to 0° to pass through 0° based on the change quantity of the rotation speed, when the rotation speed of the engine main member 11 changes in the state in which the injection quantity acquired from the engine main member controller 55 is smaller than the threshold. In the present example, as illustrated in FIG. 5, the butterfly valve 42 is driven between -10° and +15° to pass through 0°, while the rotation speed changes by 400 revolutions/min (when the change quantity of the rotation speed is 400 revolutions/min). In this state, when the butterfly valve 42 passes through 0°, the deposits D adhering to the wall surface of the gas channel 35 in the flowrate regulating position A are scraped off with the butterfly valve 42. Specifically, the deposit removal operation is performed when the butterfly valve 42 passes through 0°.

In the state in which the injection quantity of the fuel injected with each of the injectors 16 is smaller than the threshold, the quantity of NOx included in the exhaust gas discharged from the diesel engine 10 to the outside is equal to or smaller than the reference value even when the EGR device 12 is not operated. Accordingly, in the state in which the injection quantity is smaller than the threshold, the EGR device controller 56 operates the EGR device 12 for the purpose of performing the deposit removal operation.

As illustrated in FIG. 6, the storage unit 53 stores and retains therein the injection quantities of the fuel injected from each of the injectors 16 at a time, the rotation speeds of the engine main member 11, and the target rotation angle positions in which the butterfly valve 42 is to be placed, in association with each other, in the form of a table 58. When the EGR device controller 56 drives the butterfly valve 42, the EGR device controller 56 acquires the target rotation angle position with reference to the table 58 based on the injection quantity acquired from the engine main member controller 55 and the rotation speed from the engine rotation sensor 21. The EGR device controller 56 drives the EGR valve 37 (drives the drive unit 43) to place the butterfly valve 42 in the target rotation angle position. Specifically, in the present example, the EGR device controller 56 performs a drive control operation to place the butterfly valve 42 in the target rotation angle position based on the table 58. By the drive control operation for the butterfly valve 42 as described above, the EGR device controller 56 drives the butterfly valve in the first rotation angle range when the injection quantity is equal to or larger than the predetermined threshold, and drives the butterfly valve 42 in the second rotation angle range when the injection quantity is smaller than the threshold. In addition, the EGR device controller 56 rotates the butterfly valve 42 between the minus rotation angle position with respect to 0° and the plus rotation angle position with respect to 0° to pass through 0° based on the change quantity of the rotation speed, when the rotation speed changes in the state in which the injection quantity is smaller than the threshold, by the drive control operation for the butterfly valve 42 as described above.

When the butterfly valve 42 is driven to pass through 0° based on the table 58, the butterfly valve 42 scrapes off the deposits D adhering to the wall surface of the gas channel 35 in the flowrate regulating position A. Specifically, when the butterfly valve 42 is driven to pass through 0° based on the table 58, the deposit removal operation is performed as illustrated in FIG. 5.

Each of the target rotation angle positions in the case where the injection quantity is equal to or larger than the threshold is a position of the butterfly valve 42 enabling reduction of the quantity of NOx included in the exhaust gas discharged from the exhaust channel 18 to the outside through the exhaust gas treatment device 31 to a quantity equal to or smaller than the reference value when the injection quantity and the rotation speed have mutually associated values. These target rotation angle positions are determined based on experiments in which the quantity of NOx included in the exhaust gas is measured with the engine main member 11 actually driven while the aperture of the butterfly valve 42 is changed.

In addition, the EGR device controller 56 performs linear interpolation with the following expression to acquire the target rotation angle position, in the case where no target rotation angle position associated with the injection quantity agreeing with the referred injection quantity can be acquired, or in the case where no target rotation angle position associated with the rotation speed agreeing with the referred rotation speed can be acquired, when the EGR device controller 56 refers to the table 58 based on the injection quantity and the rotation speed.

Numerical Expression 1

$$\theta = \frac{\theta_{11}(Q_2 - Q)(V_2 - V) + \theta_{12}(Q_2 - Q)(V - V_1) + \theta_{21}(Q - Q_1)(V_2 - V) + \theta_{22}(Q - Q_1)(V - V_1)}{(Q_2 - Q_1)(V_2 - V_1)}$$

In the expression described above, Q is the injection quantity and V is the rotation speed based on which the EGR device controller 56 refers to the table 58. In addition, when the EGR device controller 56 refers to the table 58 based on the injection quantity Q and the rotation speed V, when the rotation speed of the same value as that of the rotation speed V is registered in the table 58, the rotation speed of the same value as that of the referred rotation speed V serves as V1. By contrast, when no rotation speed of the same value as that of the rotation speed V is registered in the table 58, V1 is the rotation speed registered in the table 58 which is lower than and closest to the referred rotation speed V. In addition, V2 is the rotation speed in the next right box (higher rotation speed) in the table 58. When the injection quantity of the same value as that of the injection quantity Q is registered in the table 58, the injection quantity of the same value as that of the referred injection quantity Q serves as Q1. By contrast, when no injection quantity of the same value as that of the injection quantity Q is registered in the table 58, Q1 is the injection quantity registered in the table 58 which is lower than and closest to the referred injection quantity Q. In addition, Q2 is the injection quantity in the next upper box (larger injection quantity) in the table 58. In addition, in the table 58, θ11 is the target rotation angle position associated with a combination of the injection quantity Q1 and the rotation speed V1, θ12 is the target rotation angle position associated with a combination of the injection quantity Q1 and the rotation speed V2, θ21 is the target rotation angle position associated with a combination of the injection quantity Q2 and the rotation speed V1, and θ22 is the target rotation angle position associated with a combination of the injection quantity Q2 and the rotation speed V2.

According to the expression described above, when the rotation speed V based on which the EGR device controller 56 refers to the table 58 is 1700 revolutions/min and the injection quantity Q is 29 mm$^3$/st, V1 is 1600, V2 is 1800, Q1 is 28, Q2 is 30, θ11 is 67, θ12 is 75, θ21 is 66, and θ22 is 74. In addition, the target rotation angle position θ acquired with the EGR device controller 56 after performing linear interpolation with reference to the table 58 is 70.5°.

The EGR device 12 decreases the temperature of the reflux gas G with the EGR cooler 36 when the reflux gas G circulates through the gas channel 35. This structure reduces the maximum combustion temperature when the mixture gas obtained by mixing the air and the reflux gas G is combusted, and suppresses the generation quantity of NOx in combustion of the mixture gas.

Opening/Closing Operations of Butterfly Valve

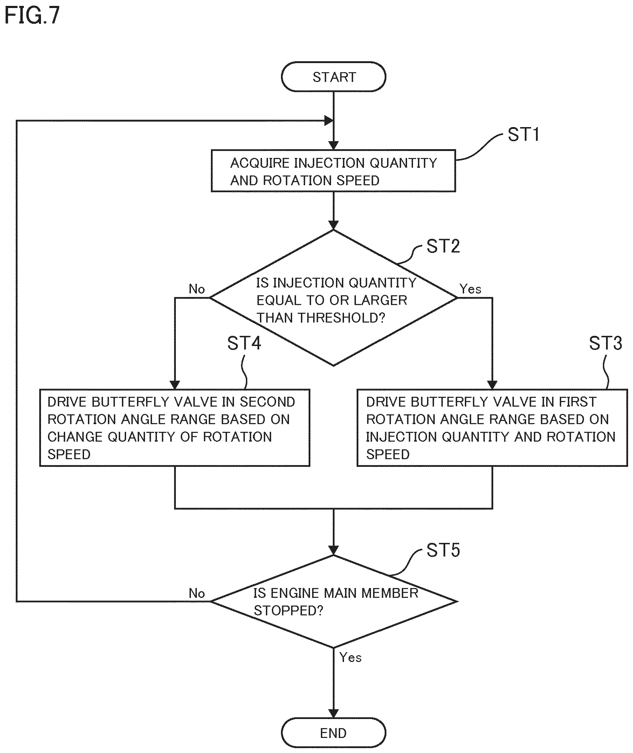

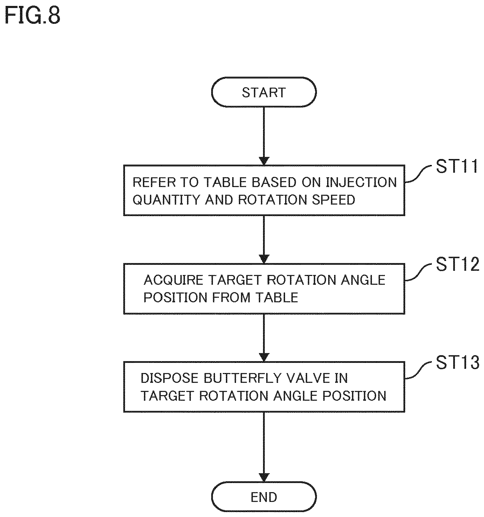

FIG. 7 is a flowchart of the opening/closing operations of the butterfly valve 42. FIG. 8 is a flowchart of the operation of driving and controlling the butterfly valve 42 with the EGR device controller 56.

When the diesel engine 10 (engine main member 11) is driven, the target rotation speed output unit 51 of the control unit 13 acquires the target rotation speed of the engine main member 11 based on the aperture of the acceleration lever 7 output from the acceleration aperture sensor 52, and inputs the target rotation speed to the engine main member controller 55. The engine main member controller 55 controls the aperture of the throttle valve 27, driving of the fuel supply pump 29, the injection quantity of the fuel injected from each of the injectors 16 at a time, and the timing of fuel injection of each of the injectors 16 based on the target rotation speed. The EGR device controller 56 acquires the injection quantity (target injection quantity) of the fuel injected with each of the injectors 16 from the engine main member controller 55. The EGR device controller 56 also acquires the rotation speed of the engine main member 11 input from the engine rotation sensor 21 to the control unit 13 (Step ST1).

The EGR device controller 56 monitors whether the injection quantity acquired from the engine main member controller 55 is equal to or larger than the threshold (6 mm$^3$/st) (Step ST2). When the injection quantity is equal to or larger than the threshold (Yes at Step ST2), the EGR device controller 56 drives the butterfly valve 42 of the EGR device 12 in the first rotation angle range of 0° or more based on the injection quantity and rotation speed of the engine main member 11 (Step ST3). In this manner, the quantity of NOx included in the exhaust gas discharged from the diesel engine 10 to the outside is reduced to a quantity equal to or smaller than the reference value.

By contrast, at Step ST2, when the injection quantity is smaller than the threshold (No at Step ST2), the EGR device controller 56 drives the butterfly valve 42 of the EGR device 12 in the second rotation angle range extending through 0°. In addition, when the injection quantity from each of the injectors 16 becomes smaller than the threshold, the EGR device controller 56 drives the butterfly valve 42 in the second rotation angle range extending between -10° and +15° based on the change quantity of the rotation speed of the engine main member 11 (Step ST4). At Step ST4, when the rotation speed of the engine main member 11 changes by 400 revolutions/min, the butterfly valve 42 is driven between -10° and +15° to pass through 0° while the rotation speed changes. Accordingly, the deposit removal operation is performed. Thereafter, the operations from Step ST1 to Step ST4 are repeated until the engine main member 11 is stopped (Yes at Step ST5).

The operations from Step ST2 to Step ST4 are achieved by the drive control operation of the EGR device controller 56, in which the EGR device controller 56 drives the butterfly valve 42 based on the table 58. As illustrated in FIG. 8, the drive control operation for the butterfly valve 42 with the EGR device controller 56 is an operation in which the EGR device controller 56 refers to the table 58 of the storage unit 53 based on the injection quantity and the rotation speed (Step ST11), acquires the target rotation angle position from the table 58 (Step ST12), and places the butterfly valve 42 in the acquired target rotation angle position by driving the EGR valve (Step ST13).

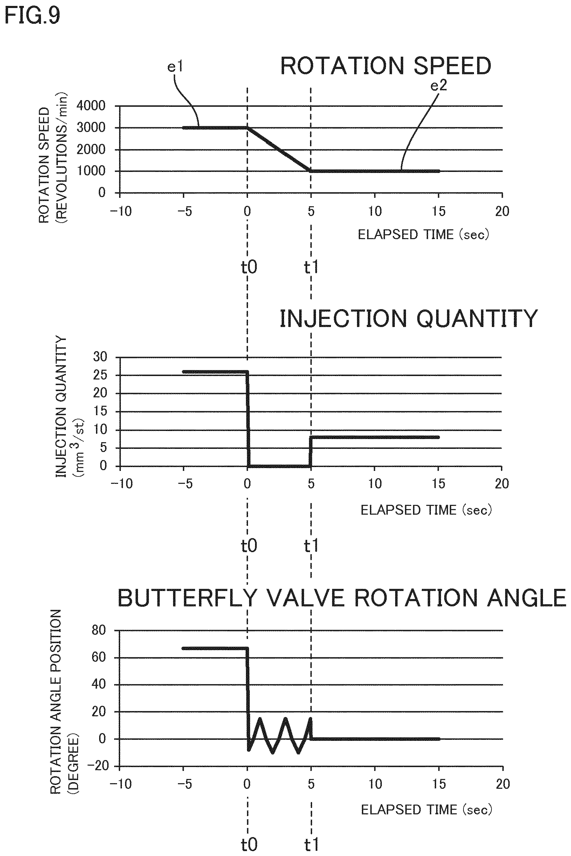

FIG. 9 is a graph illustrating change in rotation speed of the engine main member 11, change in injection quantity, and change in rotation angle position of the butterfly valve 42, when the engine main member 11 of the tractor 1 changes from the state of rotating at high speed with high load to the state of rotating at low speed with low load. The state in which the rotation speed and the injection quantity change as illustrated in the graph of FIG. 9 occurs in the case where, for example, the acceleration lever 7 is operated in the low-speed side to reduce the rotation speed and simultaneously the clutch pedal 14 is treaded to separate the power of the diesel engine 10, when the tractor 1 performs cultivation work with the rotary cultivator 8 put down. A graph in the upper part of FIG. 9 illustrates change in rotation speed of the engine main member, a graph in the middle part of FIG. 9 illustrates change in injection quantity, and a graph in the lower part of FIG. 9 illustrates change in rotation angle position. As illustrated in the graph in the upper part of FIG. 9, in the state in which the engine main member 11 rotates at high speed with high load in the present example, the rotation speed of the engine main member 11 is a first rotation speed e1. The rotation speed of the engine main member 11 after the engine main member 11 changes to the state of rotating at low speed with high load is a second rotation speed e2 lower than the first rotation speed e1.

As illustrated in FIG. 9, at point in time t0 at which the engine main member 11 changes from the state of rotating at high speed with high load to the state of rotating at low speed with low load, the injection quantity of the fuel injected from each of the injectors 16 rapidly reduces to approach zero. In this manner, the injection quantity becomes smaller than the threshold. In addition, when the injection quantity becomes smaller than the threshold, the rotation speed of the engine main member 11 gradually decreases from the first rotation speed e1 toward the second rotation speed e2. Thereafter, when the rotation speed of the engine main member 11 becomes the second rotation speed e2, at the point in time t1, the injection quantity of the fuel injected from each of the injectors 16 increases to exceed the threshold. In this manner, the engine main member 11 maintains rotation with the second rotation speed e2.

In the present example, in the period (time t0 to time t1) for which the injection quantity is smaller than the threshold, the change quantity of the rotation speed of the engine main member 11 exceeds 2000 revolutions/min, as illustrated in the graph in the upper part of FIG. 9. In this manner, the butterfly valve 42 is driven five times between -10° and +15° to pass through 0°, as illustrated in the graph in the lower part of FIG. 9. Accordingly, in the period (time t0 to t1) for which the injection quantity is smaller than the threshold, the deposit removal operation is performed five times, as illustrated in the graph in the lower part of FIG. 9.

Effects

The present example enables the deposit removal operation to scrape off the deposits D adhering to the wall surface of the gas channel 35 with the butterfly valve 42, when the injection quantity of the fuel injected from each of the injectors 16 to the combustion chamber 15 is smaller than the threshold. In addition, because the threshold is a value larger than zero, the deposit removal operation is performed while the diesel engine 10 (engine main member 11) is driven. This structure avoids solidification of the deposits D adhering to the wall surface portion of the gas channel 35 during driving of the engine main member 11 and interference of the deposits D with the butterfly valve 42 to obstruct opening and closing of the butterfly valve 42, even when the drive time of the engine main member 11 is long.

In addition, in the present example, the storage unit 53 stores and retains therein the table 58 associating the injection quantity and the rotation speed with the target rotation angle position in which the butterfly valve 42 is to be placed. When the EGR device controller 56 drives the butterfly valve 42, the EGR device controller 56 refers to the table 58 of the storage unit 53 based on the injection quantity and the rotation speed to acquire the target rotation angle position. In addition, the EGR device controller 56 drives the EGR valve 37 to place the butterfly valve 42 in the target rotation angle position. This structure enables easy driving and control of the butterfly valve 42 with the control unit 13.

In the example described above, the butterfly valve is driven and controlled with the rotation angle position, the butterfly valve may be driven and controlled with the aperture to place the butterfly valve in the desired rotation angle position. Specifically, in the table 58, the injection quantity and the rotation speed may be associated with the aperture of the butterfly valve.

The aperture corresponds to the rotation angle position, and the aperture can be calculated from the rotation angle position based on the following expressions (1) and (2).

$$\text{Aperture (\%) = coefficient} \times \text{rotation angle position} + \text{offset} \quad \dots (1)$$

$$\text{Coefficient} = 100/(\text{rotation angle position in opened posture} - \text{rotation angle position in closed posture}) \quad \dots (2)$$

In the present example, the rotation angle position in the opened posture is +80°. The rotation angle position in the closed posture is 0°. The offset is the rotation angle position in the closed posture, and is 0°. For this reason, for example, when the rotation angle position is 60°, the aperture is 75% by the following calculation.

$$\text{Coefficient} = 100/(80-0) = 1.25 \quad \dots (2)$$

$$\text{Aperture} = 1.25 \times 60 + 0 = 75 \dots (1)$$

Modification 1

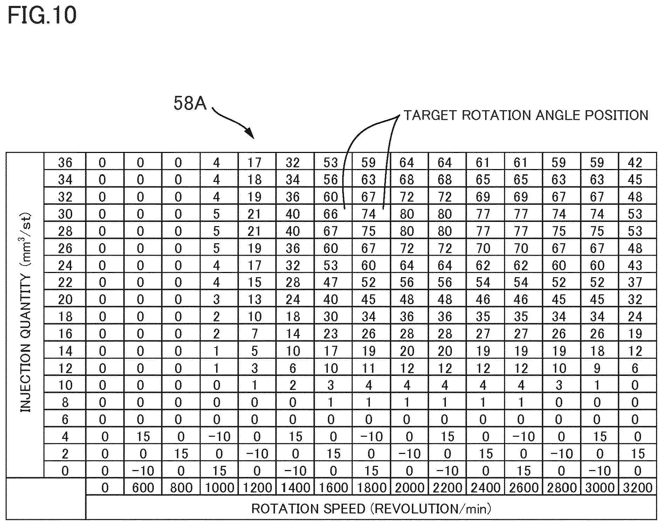

FIG. 10 is an explanatory drawing of a table 58A stored and retained in the storage unit 53 of the tractor 1 according to Modification 1. The tractor 1 according to Modification 1 is different from the tractor 1 according to the embodiment in the drive control operation (opening/closing operations of the butterfly valve 42) for the butterfly valve 42 with the EGR device controller 56 driving and controlling the EGR valve 37. Other structures of the tractor 1 of Modification 1 except for the drive control operation for the butterfly valve 42 are the same as those of the tractor 1 according to the embodiment. Accordingly, the different part will be explained hereinafter, and an explanation of the same structures will be omitted.

In the present modification, the EGR device controller 56 drives the butterfly valve 42 in a first rotation angle range of 0° or more based on the injection quantity and the rotation speed of the engine main member 11, when the injection quantity acquired from the engine main member controller 55 is equal to or larger than the predetermined threshold. In this manner, the circulation quantity of the reflux gas G is regulated to reduce the quantity of NOx included in the exhaust gas discharged from the diesel engine 10 to the outside to a quantity equal to or smaller than the predetermined reference value. Also in the present modification, the threshold is 6 mm$^3$/st. The first rotation angle range is a rotation angle range extending from 0° to +80° serving as the plus-side maximum rotation angle position.

In addition, the EGR device controller 56 drives the butterfly valve 42 in the second rotation angle range extending through 0°, when the injection quantity acquired from the engine main member controller 55 is smaller than the predetermined threshold. Also in the present modification, the second rotation angle range is a rotation angle range extending from +15° to -10° serving as the minus-side maximum rotation angle position.

Besides, the EGR device controller 56 rotates the butterfly valve 42 between a minus rotation angle position with respect to 0° and a plus rotation angle position with respect to 0° to pass through 0° based on the change quantity of the rotation speed, when the rotation speed of the engine main member 11 changes in the state in which the injection quantity acquired from the engine main member controller 55 is smaller than the predetermined threshold. In the present modification, the EGR device controller 56 drives the butterfly valve 42 between -10° and +15° to pass through 0° while the rotation speed changes by 400 revolutions/min.

In addition, in the present modification, the EGR device controller 56 drives the butterfly valve 42 in the second rotation angle range based on the rotation speed and the injection quantity, when the injection quantity changes in the state in which the injection quantity acquired from the engine main member controller 55 is smaller than the predetermined threshold.

Also in the present modification, the storage unit 53 stores and retains therein the injection quantities of the fuel injected from each of the injectors 16 at a time, the rotation speeds of the engine main member 11, and the target rotation angle positions in which the butterfly valve 42 is to be placed, in association with each other, in the form of a table 58A. When the EGR device controller 56 drives the butterfly valve 42, the EGR device controller 56 acquires the target rotation angle position with reference to the table 58A based on the injection quantity acquired from the engine main member controller 55 and the rotation speed from the engine rotation sensor 21. The EGR device controller 56 drives the EGR valve 37 (drives the drive unit 43) to place the butterfly valve 42 in the target rotation angle position. As described above, the EGR device controller 56 performs a drive control operation to drive the butterfly valve 42 based on the table 58A. In this manner, the EGR device controller 56 drives the butterfly valve 42 in the first rotation angle range when the injection quantity is equal to or larger than the predetermined threshold, and drives the butterfly valve 42 in the second rotation angle range when the injection quantity is smaller than the threshold. In addition, by driving the butterfly valve 42 based on the table 58A, the EGR device controller 56 rotates the butterfly valve 42 between the minus rotation angle position with respect to 0° and the plus rotation angle position with respect to 0° to pass through 0° based on the change quantity of the rotation speed, when the rotation speed changes in the state in which the injection quantity is smaller than the threshold. The EGR device controller 56 also drives the butterfly valve 42 in the second rotation angle range based on the rotation speed and the injection quantity, when the injection quantity changes in the state where the injection quantity is smaller than the threshold.

In addition, the EGR device controller 56 performs linear interpolation to acquire the target rotation angle position, in the same manner as the embodiment, in the case where no target rotation angle position associated with the rotation speed agreeing with the referred rotation speed can be acquired, or in the case where no target rotation angle position associated with the injection quantity agreeing with the referred injection quantity can be acquired, when the EGR device controller 56 refers to the table 58A based on the injection quantity and the rotation speed.

When the butterfly valve 42 is driven to pass through 0° based on the table 58A, the butterfly valve 42 scrapes off the deposits D adhering to the wall surface of the gas channel 35 in the flowrate regulating position A. Specifically, when the butterfly valve 42 is driven to pass through 0° based on the table 58A, the deposit removal operation is performed.

Aperture Regulating Operation for Butterfly Valve

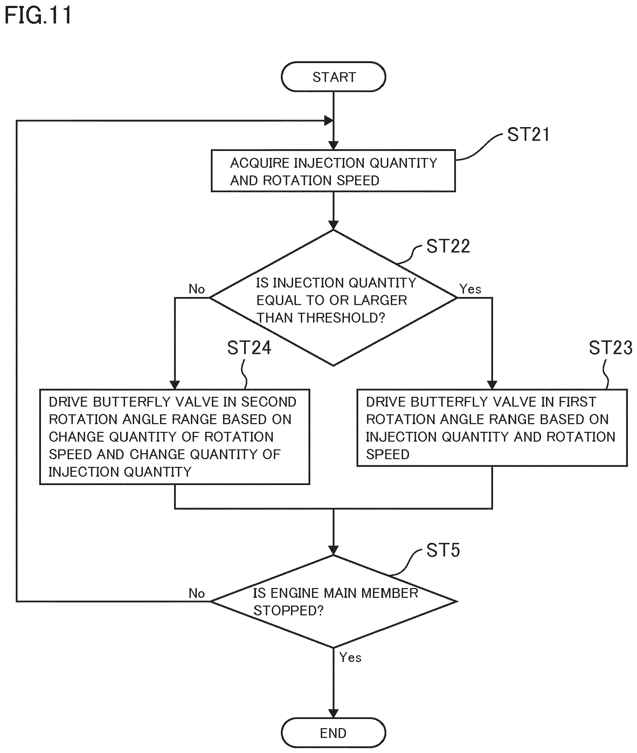

FIG. 11 is a flowchart of the opening/closing operations of the butterfly valve 42 of the tractor 1 according to Modification 1. When the diesel engine 10 (engine main member 11) is driven, the target rotation speed output unit 51 of the control unit 13 acquires the target rotation speed of the engine main member 11 based on the aperture of the acceleration lever 7 output from the acceleration aperture sensor 52, and inputs the target rotation speed to the engine main member controller 55. The engine main member controller 55 controls the aperture of the throttle valve 27, driving of the fuel supply pump 29, the injection quantity of the fuel injected from each of the injectors 16 at a time, and the timing of fuel injection of each of the injectors 16 based on the target rotation speed. The EGR device controller 56 acquires the injection quantity of the fuel controlled with the engine main member controller 55. The EGR device controller 56 also acquires the rotation speed of the engine main member 11 input from the engine rotation sensor 21 to the control unit 13 (Step ST21).

The EGR device controller 56 monitors whether the injection quantity acquired from the engine main member controller 55 is equal to or larger than the threshold (6 mm$^3$/st) (Step ST22). When the injection quantity is equal to or larger than the threshold (Yes at Step ST22), the EGR device controller 56 drives the butterfly valve 42 of the EGR device 12 in the first rotation angle range of 0° or more based on the injection quantity and rotation speed of the engine main member 11 (Step ST23). In this manner, the quantity of NOx included in the exhaust gas discharged from the diesel engine 10 to the outside is reduced to a quantity equal to or smaller than the reference value.

By contrast, at Step ST22, when the injection quantity is smaller than the threshold (No at Step ST22), the EGR device controller 56 drives the butterfly valve 42 of the EGR device 12 in the second rotation angle range extending through 0°. In addition, when the injection quantity from each of the injectors 16 becomes smaller than the threshold, the EGR device controller 56 drives the butterfly valve 42 in the second rotation angle range extending between -10° and +15° based on the change quantity of the rotation speed of the engine main member 11 (Step ST24). Specifically, at Step ST24, when the rotation speed of the engine main member 11 changes by 400 revolutions/min, the butterfly valve 42 is driven between - 10° and +15° to pass through 0° while the rotation speed changes. In addition, at Step S24, when the injection quantity changes, the EGR device controller 56 drives the butterfly valve 42 in the second rotation angle range based on the rotation speed and the injection quantity. When the butterfly valve 42 passes through 0° by these drives, the deposit removal operation is performed. Thereafter, the operations from Step ST21 to Step ST24 are repeated until the engine main member 11 is stopped (Yes at Step ST25).

The operations from Step ST22 to Step ST24 are achieved by the drive control operation of the EGR device controller 56, in which the EGR device controller 56 drives the butterfly valve 42 based on the table 58A. The drive control operation with the EGR device controller 56 is the same as the case illustrated in FIG. 8, and an operation in which the EGR device controller 56 refers to the table 58A of the storage unit 53 based on the injection quantity and the rotation speed (Step ST11), acquires the target rotation angle position from the table 58A (Step ST12), and places the butterfly valve 42 in the acquired target rotation angle position by driving the EGR valve (Step ST13).

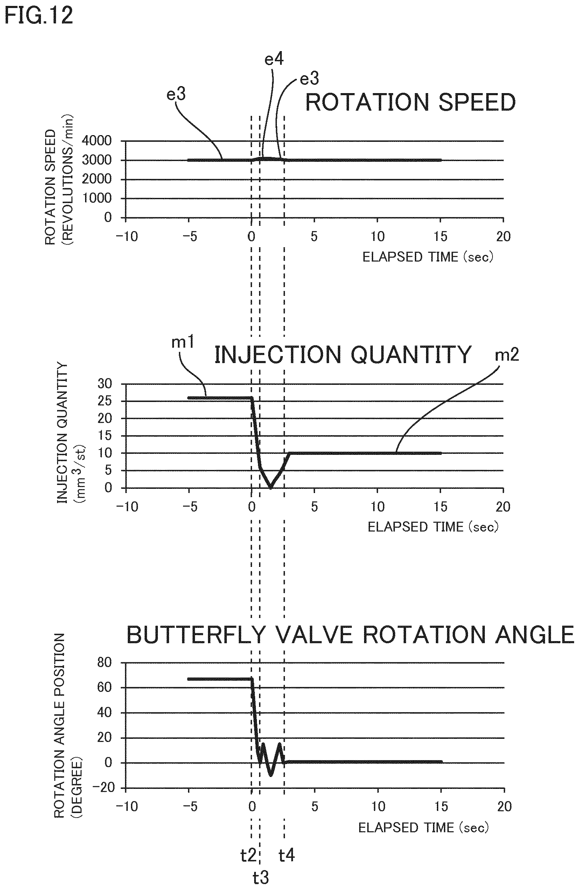

FIG. 12 is a graph illustrating change in rotation speed of the engine main member 11, change in injection quantity, and change in rotation angle position of the butterfly valve 42, when the engine main member 11 changes from the state of rotating at high speed with high load to the state of rotating at high speed with low load. The state in which the rotation speed and the injection quantity change as illustrated in the graph of FIG. 12 occurs in the case where, for example, the rotary cultivator 8 is raised to start turning, when the tractor 1 performs cultivation work with the rotary cultivator 8 put down. A graph in the upper part of FIG. 12 illustrates change in rotation speed, a graph in the middle part of FIG. 12 illustrates change in injection quantity, and a graph in the lower part of FIG. 12 illustrates change in rotation angle position. In the present modification, when the engine main member 11 changes from the state of rotating at high speed with high load to the state of rotating at high speed with low load, the rotation speed of the engine main member 11 increases from the second rotation speed e3 to the fourth rotation speed e4, and thereafter returns to the third rotation speed e3 again. By contrast, in the state in which the engine main member 11 rotates at high speed with high load, the injection quantity of the fuel injected with each of the injectors 16 is a first injection quantity m1, and the injection quantity of the fuel after the engine main member 11 changes to the state of rotating at high speed with low load is a second injection quantity m2 smaller than the first injection quantity m1. Each of the first injection quantity m1 and the second injection quantity m2 is larger than the injection quantity serving as the threshold.

At point in time t2 at which the engine main member 11 changes from the state of rotating at high speed with high load to the state of rotating at high speed with low load, the injection quantity of the fuel injected from each of the injectors 16 rapidly reduces from the first injection quantity m1 to approach zero. In this manner, the injection quantity becomes smaller than the threshold. Time t3 is the point in time at which the injection quantity becomes smaller than the threshold. In addition, after the injection quantity becomes smaller than the threshold, the injection quantity temporarily decreases gradually. Thereafter, the injection quantity gradually increases to exceed the threshold, and is maintained at the second injection quantity m2. Time t4 is the point in time at which the injection quantity exceeds the threshold.

In the present modification, in the period (time t3 to time t4) for which the injection quantity is smaller than the threshold, the rotation speed of the engine main member 11 increases from 3000 revolutions/min to 3100 revolutions/min, and thereafter returns to 3000 revolutions/min again. The injection quantity decreases from 6 mm$^3$/st to 0 mm$^3$/st, and thereafter increases from 0 mm$^3$/st toward 6 mm$^3$/st. Accordingly, in the table 58A of FIG. 10, as illustrated with the target rotation angle position corresponding to a combination of the injection quantity and the rotation speed, the butterfly valve 42 is placed in the rotation angle position of +15°, thereafter placed in the rotation angle position of -10° through 0°, and thereafter placed in the rotation angle position of +15° through 0°, in the period (time t3 to time t4) for which the injection quantity is smaller than the threshold. Accordingly, in the period (time t3 to time t4) for which the injection quantity is smaller than the threshold, the deposit removal operation is performed twice as illustrated in the graph in the lower part of FIG. 12.

Effects

The present modification produces the same effects as those of the tractor 1 of the embodiment. Specifically, the structure enables execution of the deposit removal operation of scraping off the deposit D adhering to the wall surface of the gas channel 35 with the butterfly valve 42, when the injection quantity of the fuel injected from each of the injectors 16 to the combustion chamber 15 is smaller than the threshold. In addition, because the threshold is a value larger than zero, the deposit removal operation is performed during driving of the engine main member 11.

In addition, in the present modification, when the injection quantity becomes smaller than the threshold, the EGR device controller 56 rotates the butterfly valve 42 between -10° and +15° to pass through 0° based on the change quantity of the rotation speed of the engine main member 11, and drives the butterfly valve 42 based on the change quantity of the injection quantity when the injection quantity changes. In addition, in the case where the rotation speed of the engine main member 11 has a predetermined rotation number (for example, 3000 revolutions/min) in the state in which the injection quantity is smaller than the threshold, the EGR device controller 56 rotates the butterfly valve 42 between -10° and +15° to pass through 0° based on the change quantity of the injection quantity of the engine main member 11. This structure enables execution of the deposit removal operation even when the rotation speed of the engine main member 11 is fixed, in the case where the injection quantity becomes smaller than the threshold.

In addition, in the present modification, the storage unit 53 stores and retains therein the table 58A associating the injection quantity and the rotation speed with the target rotation angle position in which the butterfly valve 42 is to be placed. Besides, the EGR device controller 56 acquires the target rotation angle position with reference to the table 58A of the storage unit 53 based on the injection quantity and the rotation speed when the butterfly valve 42 is driven. The EGR device controller 56 also drives the EGR valve 37 (drives the drive unit 43) to place the butterfly valve 42 in the target rotation angle position. This structure enables easy drive and control of the butterfly valve 42 with the control unit 13.

The modification described above illustrates the case where the butterfly valve is driven and controlled with the rotation angle position, the butterfly valve may be driven and controlled with the aperture to place the butterfly valve in the desired rotation angle position.

Modification 2

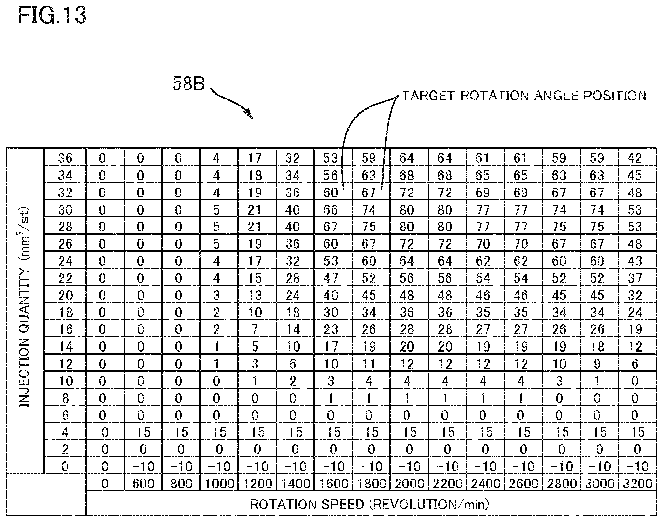

FIG. 13 is an explanatory drawing of a table 58B stored and retained in the storage unit 53 of the tractor 1 according to Modification 2. The tractor 1 according to Modification 2 is different from the tractor 1 of the embodiment in the drive control operation of the butterfly valve 42 (opening/closing operations of the butterfly valve 42) with the EGR device controller 56 driving and controlling the EGR valve 37. The tractor 1 according to Modification 2 is the same as the tractor 1 according to the examples in other structures except for the drive control operation for the butterfly valve 42 with the EGR device controller 56. For this reason, the different part will be explained hereinafter, and an explanation of the same structures will be omitted.

In the present modification, the EGR device controller 56 drives the butterfly valve 42 in the first rotation angle range of 0° or more based on the injection quantity and the rotation speed of the engine main member 11. This structure regulates the circulation quantity of the reflux gas G and reduces the quantity of NOx included in the exhaust gas discharged from the diesel engine 10 to the outside to a quantity equal to or smaller than the predetermined reference value. Also in the present modification, the threshold is 6 mm$^3$/st. The first rotation angle range is a rotation angle range extending from 0° to +80° serving as the plus-side maximum rotation angle position.

In addition, the EGR device controller 56 drives the butterfly valve 42 in the second rotation angle range extending through 0°, when the injection quantity acquired from the engine main member controller 55 is smaller than the threshold. Also in the present modification, the second rotation angle range is a rotation angle range extending from +15° to -10° serving as the minus-side maximum rotation angle position.

The EGR device controller 56 also rotates the butterfly valve 42 between the minus rotation angle position with respect to 0° and the plus rotation angle position with respect to 0° to pass through 0° based on the change quantity of the injection quantity, when the injection quantity of the engine main member 11 changes in the state where the injection quantity acquired from the engine main member controller 55 is smaller than the threshold. In the present modification, the EGR device controller 56 drives the butterfly valve 42 between -10° to +15° to pass through 0°, while the injection quantity changes by 4mm$^3$/st.

Also in the present modification, as illustrated in FIG. 13, the storage unit 53 stores and retains therein the injection quantities of the fuel injected from each of the injectors 16 at a time, the rotation speeds of the engine main member 11, and the target rotation angle positions in which the butterfly valve 42 is to be placed, in association with each other, in the form of a table 58B. When the EGR device controller 56 drives the butterfly valve 42, the EGR device controller 56 acquires the target rotation angle position with reference to the table 58B based on the injection quantity acquired from the engine main member controller 55 and the rotation speed from the engine rotation sensor 21. The EGR device controller 56 drives the EGR valve 37 (drives the drive unit 43) to place the butterfly valve 42 in the target rotation angle position. As described above, the EGR device controller 56 drives the butterfly valve 42 in the first rotation angle range when the injection quantity is equal to or larger than the predetermined threshold, and drives the butterfly valve 42 in the second rotation angle range when the injection quantity is smaller than the threshold. In addition, the EGR device controller 56 rotates the butterfly valve 42 between the minus rotation angle position with respect to 0° and the plus rotation angle position with respect to 0° to pass through 0° based on the change quantity of the rotation speed, when the rotation speed changes in the state in which the injection quantity is smaller than the threshold, by the drive control operation for the butterfly valve 42 as described above.

In addition, the EGR device controller 56 performs linear interpolation to acquire the target rotation angle position, in the same manner as the embodiment, in the case where no target rotation angle position associated with the rotation speed agreeing with the referred rotation speed can be acquired, or in the case where no target rotation angle position associated with the injection quantity agreeing with the referred injection quantity can be acquired, when the EGR device controller 56 refers to the table 58B based on the injection quantity and the rotation speed.

Aperture Regulating Operation for Butterfly Valve

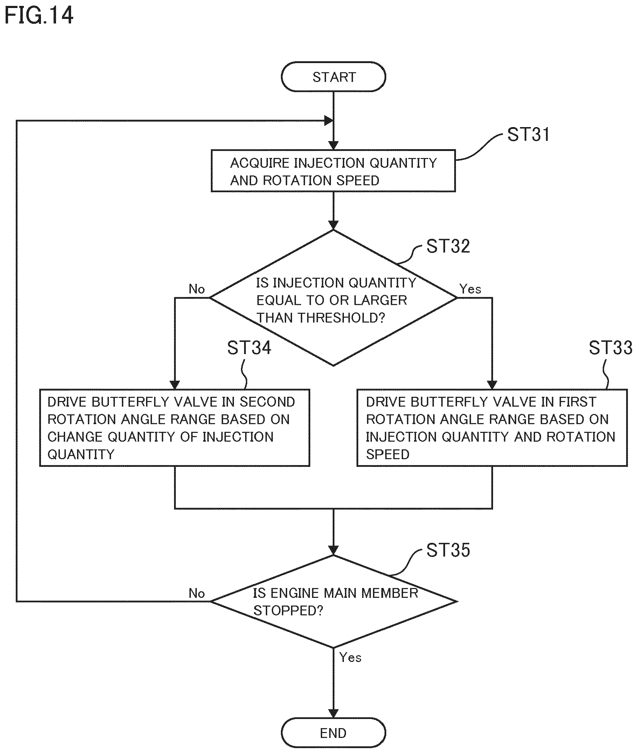

FIG. 14 is a flowchart of opening/closing operations of the butterfly valve 42 of the tractor 1 according to Modification 2. When the diesel engine 10 (engine main member 11) is driven, the target rotation speed output unit 51 of the control unit 13 acquires the target rotation speed of the engine main member 11 based on the aperture of the acceleration lever 7 output from the acceleration aperture sensor 52, and inputs the target rotation speed to the engine main member controller 55. The engine main member controller 55 controls the aperture of the throttle valve 27, driving of the fuel supply pump 29, the injection quantity of the fuel injected from each of the injectors 16 at a time, and the timing of fuel injection of each of the injectors 16 based on the target rotation speed. The EGR device controller 56 acquires the injection quantity of the fuel controlled with the engine main member controller 55. The EGR device controller 56 also acquires the rotation speed of the engine main member 11 input from the engine rotation sensor 21 to the control unit 13 (Step ST31).

The EGR device controller 56 monitors whether the injection quantity acquired from the engine main member controller 55 is equal to or larger than the threshold (6 mm$^3$/st) (Step ST32). When the injection quantity is equal to or larger than the threshold (Yes at Step ST32), the EGR device controller 56 drives the butterfly valve 42 of the EGR device 12 in the first rotation angle range of 0° or more based on the injection quantity and rotation speed of the engine main member 11 (Step ST33). In this manner, the quantity of NOx included in the exhaust gas discharged from the diesel engine 10 to the outside is reduced to a quantity equal to or smaller than the reference value.

By contrast, at Step ST32, when the injection quantity is smaller than the threshold (No at Step ST232), the EGR device controller 56 drives the butterfly valve 42 of the EGR device 12 in the second rotation angle range extending through 0°. In addition, when the injection quantity from each of the injectors 16 becomes smaller than the threshold, the EGR device controller 56 drives the butterfly valve 42 in the second rotation angle range extending between -10° and +15° based on the change quantity of the injection quantity of the engine main member 11 (Step ST34). Specifically, at Step ST34, when the injection quantity of the engine main member 11 changes between 4 mm$^3$/st and 0 mm$^3$/st to hold 2 mm$^3$/st therebetween, the butterfly valve 42 is driven between -10° and +15° to pass through 0° based on the change quantity of the injection quantity. In this manner, the deposit removal operation is performed. Thereafter, the operations from Step ST31 to Step ST34 are repeated until the engine main member 11 is stopped (Yes at Step ST5).

The operations from Step ST32 to Step ST34 are achieved by the drive control operation of the EGR device controller 56, in which the EGR device controller 56 drives the butterfly valve 42 based on the table 58B. The drive control operation with the EGR device controller 56 is the same as the case illustrated in FIG. 8, and an operation in which the EGR device controller 56 refers to the table 58B of the storage unit 53 based on the injection quantity and the rotation speed (Step ST11), acquires the target rotation angle position from the table 58B (Step ST12), and places the butterfly valve 42 in the acquired target rotation angle position by driving the EGR valve (Step ST13).

Also in the present modification, when the butterfly valve 42 is driven to pass through 0° based on the table 58B, the butterfly valve 42 scrapes off the deposits D adhering to the wall surface of the gas channel 35 in the flowrate regulating position A. Specifically, when the butterfly valve 42 is driven to pass through 0° based on the table 58B, the deposit removal operation is performed.

Other Embodiments

In the embodiment described above, the EGR device controller 56 acquires the target injection quantity acquired with the engine main member controller 55, as the injection quantity of the fuel injected with each of the injectors 16. By contrast, when each of the injectors 16 is provided with an injection quantity detector detecting, in real time, the injection quantity of the fuel injected with each of the injectors 16, the EGR device controller 56 may acquire the valve detected with the injection quantity detector, as the injection quantity of the fuel injected with each of the injectors 16.

In the embodiment described above, the diesel engine 10 to which the present invention is applied is adopted in the tractor 1. However, the diesel engine 10 may be adopted in a vehicle, such as a combine harvester.

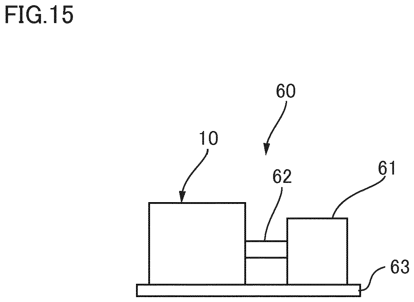

In addition, the diesel engine 10 to which the present invention is applied can be adopted as a drive source for a power generator, a pump, or a compressor, or the like. FIG. 15 is an explanatory drawing of a power generator unit including the diesel engine 10 serving as a drive source. A power generator unit 60 illustrated in FIG. 15 includes the diesel engine 10, a power generator 61, a rotation transmission mechanism 62 transmitting rotation output from the diesel engine 10 to the power generator 61, and a pedestal on which the diesel engine 10 and the power generator 61 are placed.

Also in the case where the diesel engine 10 is used as the drive source of the power generator unit 60 as described above, the deposit removal operation can be performed during driving of the diesel engine 10 (engine main member 11). Accordingly, this structure prevents the deposits adhering to the wall surface portion of the gas channel during driving of the engine main member from solidifying and interfering with the butterfly valve to obstruct opening and closing of the butterfly valve.

**Claims**

1.   A diesel engine comprising: an engine main member including a combustion chamber, an injector injecting fuel to the combustion chamber, and an intake channel supplying air to the combustion chamber; and an EGR device including a gas channel returning part of exhaust gas from the combustion chamber as reflux gas to the intake channel, and a butterfly valve disposed in a flowrate regulating position set in a middle of the gas channel, the diesel engine further comprising:

a controller acquiring injection quantity of fuel injected with the injector and driving the butterfly valve, wherein the controller drives the butterfly valve in a first rotation angle range of 0° or more when the injection quantity is equal to or larger than a predetermined threshold, and drives the butterfly valve in a second rotation angle range extending through 0° when the injection quantity is smaller than the threshold, where 0° is a rotation angle position of the butterfly valve at the time when the butterfly valve is in a closed posture orthogonal to a circulation direction of the reflux gas, and
the threshold is a value larger than zero.

2.  The diesel engine according to claim 1, further comprising:

a detector detecting rotation speed of the engine main member, wherein
the controller drives the butterfly valve between a minus rotation angle position with respect to 0° and a plus rotation angle position with respect to 0° to pass through 0° based on change quantity of the rotation speed, when the rotation speed changes in a state in which the injection quantity is smaller than the threshold.

3.  The diesel engine according to claim 2, wherein the controller drives the butterfly valve between the minus rotation angle position with respect to 0° and the plus rotation angle position with respect to 0° to pass through 0° based on change quantity of the injection quantity, when the injection quantity changes in the state in which the injection quantity is smaller than the threshold.

4.  The diesel engine according to claim 2 or 3, further comprising:

a storage unit storing and retaining therein the injection quantity, the rotation speed, and a target rotation angle position in which the butterfly valve is to be placed, in a form of associating with each other, wherein
when the controller drives the butterfly valve, the controller acquires the target rotation angle position with reference to the storage unit based on the injection quantity and the rotation speed to place the butterfly valve in the target rotation angle position.

5.  The diesel engine according to claim 1, wherein the controller drives the butterfly valve between a minus rotation angle position with respect to 0° and a plus rotation angle position with respect to 0° to pass through 0° based on change quantity of the injection quantity, when the injection quantity changes in a state in which the injection quantity is smaller than the threshold.

6.  The diesel engine according to claim 5, further comprising:

a detector detecting rotation speed of the engine main member; and
a storage unit storing and retaining therein the injection quantity, the rotation speed, and a target rotation angle position in which the butterfly valve is to be placed, in a form of associating with each other, wherein
when the controller drives the butterfly valve, the controller acquires the target rotation angle position with reference to the storage unit based on the injection quantity and the rotation speed to place the butterfly valve in the target rotation angle position.

7.  A vehicle comprising the diesel engine according to any one of claims 1 to 6.

8.  A method for controlling a diesel engine including: an engine main member including a combustion chamber, an injector injecting fuel to the combustion chamber, and an intake channel supplying air to the combustion chamber; and an EGR device including a gas channel returning part of exhaust gas from the combustion chamber as reflux gas to the intake channel, and a butterfly valve disposed in a flowrate regulating position set in a middle of the gas channel, the method comprising:

driving the butterfly valve in a first rotation angle range of 0° or more when injection quantity of fuel injected with the injector is equal to or larger than a predetermined threshold, and driving the butterfly valve in a second rotation angle range extending through 0° when the injection quantity is smaller than the threshold, where 0° is a rotation angle position of the butterfly valve at the time when the butterfly valve is in a closed posture orthogonal to a circulation direction of the reflux gas, wherein
the threshold is a value larger than zero.

9.  The method according to claim 8, wherein
the diesel engine further includes a detector detecting rotation speed of the engine main member, and
the butterfly valve is driven between a minus rotation angle position with respect to 0° and a plus rotation angle position with respect to 0° to pass through 0° based on change quantity of the rotation speed, when the rotation speed changes in a state in which the injection quantity is smaller than the threshold.

10. The method according to claim 9, wherein
the driving includes driving the butterfly valve between the minus rotation angle position with respect to 0° and the plus rotation angle position with respect to 0° to pass through 0° based on change quantity of the injection quantity, when the injection quantity changes in the state in which the injection quantity is smaller than the threshold.

11. The method according to claim 9 or 10, further comprising:

storing and retaining, in a storage unit, the injection quantity, the rotation speed, and a target rotation angle position in which the butterfly valve is to be placed, in a form of associating with each other, wherein
when the butterfly valve is driven, the target rotation angle position is acquired with reference to the storage unit based on the injection quantity and the rotation speed to place the butterfly valve in the target rotation angle position.

12. The method according to claim 8, wherein
the butterfly valve is driven between a minus rotation angle position with respect to 0° and a plus rotation angle position with respect to 0° to pass through 0° based on change quantity of the injection quantity, when the injection quantity changes in a state in which the injection quantity is smaller than the threshold.

13. The method according to claim 12, the diesel engine further including a detector detecting rotation speed of the engine main member,
the method further comprising storing and retaining therein the injection quantity, the rotation speed, and a target rotation angle position in which the butterfly valve is to be placed, in a form of associating with each other, wherein
when the butterfly valve is driven, the target rotation angle position is acquired with reference to the storage unit based on the injection quantity and the rotation speed to place the butterfly valve in the target rotation angle position.

FIG.1

EP 3 553 296 A1

FIG.2

18

FIG.3

(a)

(b)

FIG.4

(a)

42    0°−10°

A    35

(b)

42(42A)    0°

A    35

(c)

+15°    0°    42

A    35

(d)

0°    42(42B)

+80°

A    35

FIG.5

# FIG.6

58

TARGET ROTATION ANGLE POSITION

| INJECTION QUANTITY (mm³/st) | | 0 | 600 | 800 | 1000 | 1200 | 1400 | 1600 | 1800 | 2000 | 2200 | 2400 | 2600 | 2800 | 3000 | 3200 |
|---|---|---|---|---|---|---|---|---|---|---|---|---|---|---|---|---|
| | 36 | 0 | 0 | 0 | 4 | 17 | 32 | 53 | 59 | 64 | 64 | 61 | 61 | 59 | 59 | 42 |
| | 34 | 0 | 0 | 0 | 4 | 18 | 34 | 56 | 63 | 68 | 68 | 65 | 65 | 63 | 63 | 45 |
| | 32 | 0 | 0 | 0 | 4 | 19 | 36 | 60 | 67 | 72 | 72 | 69 | 69 | 67 | 67 | 48 |
| | 30 | 0 | 0 | 0 | 5 | 21 | 40 | 66 | 74 | 80 | 80 | 77 | 77 | 74 | 74 | 53 |
| | 28 | 0 | 0 | 0 | 5 | 21 | 40 | 67 | 75 | 80 | 80 | 77 | 77 | 75 | 75 | 53 |
| | 26 | 0 | 0 | 0 | 5 | 19 | 36 | 60 | 67 | 72 | 72 | 70 | 70 | 67 | 67 | 48 |
| | 24 | 0 | 0 | 0 | 4 | 17 | 32 | 53 | 60 | 64 | 64 | 62 | 62 | 60 | 60 | 43 |
| | 22 | 0 | 0 | 0 | 4 | 15 | 28 | 47 | 52 | 56 | 56 | 54 | 54 | 52 | 52 | 37 |
| | 20 | 0 | 0 | 0 | 3 | 13 | 24 | 40 | 45 | 48 | 48 | 46 | 46 | 45 | 45 | 32 |
| | 18 | 0 | 0 | 0 | 2 | 10 | 18 | 30 | 34 | 36 | 36 | 35 | 35 | 34 | 34 | 24 |
| | 16 | 0 | 0 | 0 | 2 | 7 | 14 | 23 | 26 | 28 | 28 | 27 | 27 | 26 | 26 | 19 |
| | 14 | 0 | 0 | 0 | 1 | 5 | 10 | 17 | 19 | 20 | 20 | 19 | 19 | 19 | 18 | 12 |
| | 12 | 0 | 0 | 0 | 1 | 3 | 6 | 10 | 11 | 12 | 12 | 12 | 12 | 10 | 9 | 6 |
| | 10 | 0 | 0 | 0 | 0 | 1 | 2 | 3 | 4 | 4 | 4 | 4 | 4 | 3 | 1 | 0 |
| | 8 | 0 | 0 | 0 | 0 | 0 | 0 | 1 | 1 | 1 | 1 | 1 | 1 | 0 | 0 | 0 |
| | 6 | 0 | 0 | 0 | 0 | 0 | 0 | 0 | 0 | 0 | 0 | 0 | 0 | 0 | 0 | 0 |
| | 4 | 0 | −10 | 0 | 15 | 0 | −10 | 0 | 15 | 0 | −10 | 0 | 15 | 0 | −10 | 0 |
| | 2 | 0 | −10 | 0 | 15 | 0 | −10 | 0 | 15 | 0 | −10 | 0 | 15 | 0 | −10 | 0 |
| | 0 | 0 | −10 | 0 | 15 | 0 | −10 | 0 | 15 | 0 | −10 | 0 | 15 | 0 | −10 | 0 |

ROTATION SPEED (REVOLUTION/min)

FIG.7

```
                         ┌──────────┐
                         │  START   │
                         └────┬─────┘
                              │
      ┌───────────────────────┼
      │                       ▼
      │            ┌─────────────────────────┐      ST1
      │            │ ACQUIRE INJECTION QUANTITY │
      │            │ AND ROTATION SPEED        │
      │            └────────────┬────────────┘
      │                         │
      │                         ▼
      │                   ◇─────────────◇        ST2
      │          No      ╱ IS INJECTION   ╲   Yes
      │        ┌────────╱  QUANTITY EQUAL   ╲────────┐
      │        │        ╲  TO OR LARGER      ╱        │
      │        │         ╲ THAN THRESHOLD?  ╱         │
      │     ST4│          ◇─────────────◇          ST3│
      │        ▼                                      ▼
      │ ┌────────────────────┐      ┌────────────────────┐
      │ │ DRIVE BUTTERFLY    │      │ DRIVE BUTTERFLY    │
      │ │ VALVE IN SECOND    │      │ VALVE IN FIRST     │
      │ │ ROTATION ANGLE     │      │ ROTATION ANGLE     │
      │ │ RANGE BASED ON     │      │ RANGE BASED ON     │
      │ │ CHANGE QUANTITY OF │      │ INJECTION QUANTITY │
      │ │ ROTATION SPEED     │      │ AND ROTATION SPEED │
      │ └─────────┬──────────┘      └─────────┬──────────┘
      │           │                           │
      │           └─────────────┬─────────────┘
      │                         ▼
      │                   ◇─────────────◇        ST5
      │       No         ╱ IS ENGINE MAIN ╲
      └─────────────────╱  MEMBER STOPPED? ╲
                        ╲                   ╱
                         ◇─────────────◇
                              │ Yes
                              ▼
                         ┌──────────┐
                         │   END    │
                         └──────────┘
```

23

FIG.8

```
                        ┌─────────────┐
                        │    START    │
                        └─────────────┘
                               │
                               ▼
        ┌─────────────────────────────────────┐      ST11
        │ REFER TO TABLE BASED ON INJECTION    │─┐
        │ QUANTITY AND ROTATION SPEED          │
        └─────────────────────────────────────┘
                               │
                               ▼
        ┌─────────────────────────────────────┐      ST12
        │ ACQUIRE TARGET ROTATION ANGLE        │─┐
        │ POSITION FROM TABLE                  │
        └─────────────────────────────────────┘
                               │
                               ▼
        ┌─────────────────────────────────────┐      ST13
        │ DISPOSE BUTTERFLY VALVE IN           │─┐
        │ TARGET ROTATION ANGLE POSITION       │
        └─────────────────────────────────────┘
                               │
                               ▼
                        ┌─────────────┐
                        │     END     │
                        └─────────────┘
```

FIG.9

ROTATION SPEED

INJECTION QUANTITY

BUTTERFLY VALVE ROTATION ANGLE

# FIG.10

58A

TARGET ROTATION ANGLE POSITION

| INJECTION QUANTITY (mm³/st) | 36 | 0 | 0 | 0 | 4 | 17 | 32 | 53 | 59 | 64 | 64 | 61 | 61 | 59 | 59 | 42 |
|---|---|---|---|---|---|---|---|---|---|---|---|---|---|---|---|---|
| | 34 | 0 | 0 | 0 | 4 | 18 | 34 | 56 | 63 | 68 | 68 | 65 | 65 | 63 | 63 | 45 |
| | 32 | 0 | 0 | 0 | 4 | 19 | 36 | 60 | 67 | 72 | 72 | 69 | 69 | 67 | 67 | 48 |
| | 30 | 0 | 0 | 0 | 5 | 21 | 40 | 66 | 74 | 80 | 80 | 77 | 77 | 74 | 74 | 53 |
| | 28 | 0 | 0 | 0 | 5 | 21 | 40 | 67 | 75 | 80 | 80 | 77 | 77 | 75 | 75 | 53 |
| | 26 | 0 | 0 | 0 | 5 | 19 | 36 | 60 | 67 | 72 | 72 | 70 | 70 | 67 | 67 | 48 |
| | 24 | 0 | 0 | 0 | 4 | 17 | 32 | 53 | 60 | 64 | 64 | 62 | 62 | 60 | 60 | 43 |
| | 22 | 0 | 0 | 0 | 4 | 15 | 28 | 47 | 52 | 56 | 56 | 54 | 54 | 52 | 52 | 37 |
| | 20 | 0 | 0 | 0 | 3 | 13 | 24 | 40 | 45 | 48 | 48 | 46 | 46 | 45 | 45 | 32 |
| | 18 | 0 | 0 | 0 | 2 | 10 | 18 | 30 | 34 | 36 | 36 | 35 | 35 | 34 | 34 | 24 |
| | 16 | 0 | 0 | 0 | 2 | 7 | 14 | 23 | 26 | 28 | 28 | 27 | 27 | 26 | 26 | 19 |
| | 14 | 0 | 0 | 0 | 1 | 5 | 10 | 17 | 19 | 20 | 20 | 19 | 19 | 19 | 18 | 12 |
| | 12 | 0 | 0 | 0 | 1 | 3 | 6 | 10 | 11 | 12 | 12 | 12 | 12 | 10 | 9 | 6 |
| | 10 | 0 | 0 | 0 | 0 | 1 | 2 | 3 | 4 | 4 | 4 | 4 | 4 | 3 | 1 | 0 |
| | 8 | 0 | 0 | 0 | 0 | 0 | 0 | 1 | 1 | 1 | 1 | 1 | 1 | 0 | 0 | 0 |
| | 6 | 0 | 0 | 0 | 0 | 0 | 0 | 0 | 0 | 0 | 0 | 0 | 0 | 0 | 0 | 0 |
| | 4 | 0 | 15 | 0 | −10 | 0 | 15 | 0 | −10 | 0 | 15 | 0 | −10 | 0 | 15 | 0 |
| | 2 | 0 | 0 | 15 | 0 | −10 | 0 | 15 | 0 | −10 | 0 | 15 | 0 | −10 | 0 | 15 |
| | 0 | 0 | −10 | 0 | 15 | 0 | −10 | 0 | 15 | 0 | −10 | 0 | 15 | 0 | −10 | 0 |
| | 0 | 600 | 800 | 1000 | 1200 | 1400 | 1600 | 1800 | 2000 | 2200 | 2400 | 2600 | 2800 | 3000 | 3200 | |
| | ROTATION SPEED (REVOLUTION/min) | | | | | | | | | | | | | | | |

FIG.11

```
                          ┌─────────────┐
                          │    START    │
                          └──────┬──────┘
                                 │
  ┌──────────────────────────────┤
  │                              ▼                         ╭─ ST21
  │              ┌──────────────────────────────┐
  │              │  ACQUIRE INJECTION QUANTITY   │
  │              │  AND ROTATION SPEED           │
  │              └───────────────┬───────────────┘
  │                              │
  │                              ▼                    ╭─ ST22
  │                          ◇◇◇◇◇◇◇◇◇◇◇◇◇◇◇
  │            No          ◇ IS INJECTION QUANTITY ◇        Yes
  │         ◇──────────────◇ EQUAL TO OR LARGER   ◇──────────────┐
  │         │              ◇ THAN THRESHOLD?       ◇             │
  │         │               ◇◇◇◇◇◇◇◇◇◇◇◇◇◇◇              │
  │   ST24  │                                                     │  ST23
  │         ▼                                                     ▼
  │  ┌──────────────────────────────┐      ┌──────────────────────────────┐
  │  │ DRIVE BUTTERFLY VALVE IN SECOND│     │ DRIVE BUTTERFLY VALVE IN FIRST │
  │  │ ROTATION ANGLE RANGE BASED ON  │     │ ROTATION ANGLE RANGE BASED ON  │
  │  │ CHANGE QUANTITY OF ROTATION    │     │ INJECTION QUANTITY AND ROTATION│
  │  │ SPEED AND CHANGE QUANTITY OF   │     │ SPEED                          │
  │  │ INJECTION QUANTITY             │     │                                │
  │  └───────────────┬────────────────┘     └───────────────┬────────────────┘
  │                  └──────────────┬──────────────────────┘
  │                                 ▼                    ╭─ ST5
  │                             ◇◇◇◇◇◇◇◇◇◇◇◇◇
  │            No             ◇ IS ENGINE MAIN MEMBER ◇
  └───────────────────────────◇ STOPPED?            ◇
                               ◇◇◇◇◇◇◇◇◇◇◇◇◇
                                     │ Yes
                                     ▼
                              ┌─────────────┐
                              │     END     │
                              └─────────────┘
```

## FIG.12

## FIG.13

58B

TARGET ROTATION ANGLE POSITION

| INJECTION QUANTITY (mm³/st) | 0 | 600 | 800 | 1000 | 1200 | 1400 | 1600 | 1800 | 2000 | 2200 | 2400 | 2600 | 2800 | 3000 | 3200 |
|---|---|---|---|---|---|---|---|---|---|---|---|---|---|---|---|
| 36 | 0 | 0 | 0 | 4 | 17 | 32 | 53 | 59 | 64 | 64 | 61 | 61 | 59 | 59 | 42 |
| 34 | 0 | 0 | 0 | 4 | 18 | 34 | 56 | 63 | 68 | 68 | 65 | 65 | 63 | 63 | 45 |
| 32 | 0 | 0 | 0 | 4 | 19 | 36 | 60 | 67 | 72 | 72 | 69 | 69 | 67 | 67 | 48 |
| 30 | 0 | 0 | 0 | 5 | 21 | 40 | 66 | 74 | 80 | 80 | 77 | 77 | 74 | 74 | 53 |
| 28 | 0 | 0 | 0 | 5 | 21 | 40 | 67 | 75 | 80 | 80 | 77 | 77 | 75 | 75 | 53 |
| 26 | 0 | 0 | 0 | 5 | 19 | 36 | 60 | 67 | 72 | 72 | 70 | 70 | 67 | 67 | 48 |
| 24 | 0 | 0 | 0 | 4 | 17 | 32 | 53 | 60 | 64 | 64 | 62 | 62 | 60 | 60 | 43 |
| 22 | 0 | 0 | 0 | 4 | 15 | 28 | 47 | 52 | 56 | 56 | 54 | 54 | 52 | 52 | 37 |
| 20 | 0 | 0 | 0 | 3 | 13 | 24 | 40 | 45 | 48 | 48 | 46 | 46 | 45 | 45 | 32 |
| 18 | 0 | 0 | 0 | 2 | 10 | 18 | 30 | 34 | 36 | 36 | 35 | 35 | 34 | 34 | 24 |
| 16 | 0 | 0 | 0 | 2 | 7 | 14 | 23 | 26 | 28 | 28 | 27 | 27 | 26 | 26 | 19 |
| 14 | 0 | 0 | 0 | 1 | 5 | 10 | 17 | 19 | 20 | 20 | 19 | 19 | 19 | 18 | 12 |
| 12 | 0 | 0 | 0 | 1 | 3 | 6 | 10 | 11 | 12 | 12 | 12 | 12 | 10 | 9 | 6 |
| 10 | 0 | 0 | 0 | 0 | 1 | 2 | 3 | 4 | 4 | 4 | 4 | 4 | 3 | 1 | 0 |
| 8 | 0 | 0 | 0 | 0 | 0 | 0 | 1 | 1 | 1 | 1 | 1 | 1 | 0 | 0 | 0 |
| 6 | 0 | 0 | 0 | 0 | 0 | 0 | 0 | 0 | 0 | 0 | 0 | 0 | 0 | 0 | 0 |
| 4 | 0 | 15 | 15 | 15 | 15 | 15 | 15 | 15 | 15 | 15 | 15 | 15 | 15 | 15 | 15 |
| 2 | 0 | 0 | 0 | 0 | 0 | 0 | 0 | 0 | 0 | 0 | 0 | 0 | 0 | 0 | 0 |
| 0 | 0 | −10 | −10 | −10 | −10 | −10 | −10 | −10 | −10 | −10 | −10 | −10 | −10 | −10 | −10 |

ROTATION SPEED (REVOLUTION/min)

## FIG.14

```
              START
                │
                ▼
  ┌──────────────────────────────┐ ──── ST31
  │ ACQUIRE INJECTION QUANTITY   │
  │ AND ROTATION SPEED           │
  └──────────────────────────────┘
                │
                ▼
              ╱────╲  ──── ST32
        No  ╱ IS INJECTION ╲  Yes
      ◄────┤ QUANTITY EQUAL ├────►
           ╲ TO OR LARGER  ╱
            ╲THAN THRESHOLD?╱
             ╲────╱
```

ST34                                ST33

```
┌─────────────────────────────┐   ┌─────────────────────────────┐
│ DRIVE BUTTERFLY VALVE IN     │   │ DRIVE BUTTERFLY VALVE IN     │
│ SECOND ROTATION ANGLE RANGE  │   │ FIRST ROTATION ANGLE RANGE   │
│ BASED ON CHANGE QUANTITY OF  │   │ BASED ON INJECTION QUANTITY  │
│ INJECTION QUANTITY           │   │ AND ROTATION SPEED           │
└─────────────────────────────┘   └─────────────────────────────┘
```

```
                ▼   ──── ST35
        No    ╱────╲
      ◄──────┤ IS ENGINE MAIN ├
             ╲ MEMBER STOPPED?╱
              ╲────╱
                │ Yes
                ▼
              END
```

FIG.15

# INTERNATIONAL SEARCH REPORT

| International application No. |
| --- |
| PCT/JP2017/033189 |

**A. CLASSIFICATION OF SUBJECT MATTER**
Int.Cl. F02D21/08(2006.01)i, F02D45/00(2006.01)i, F02M26/74(2016.01)i

According to International Patent Classification (IPC) or to both national classification and IPC

**B. FIELDS SEARCHED**

Minimum documentation searched (classification system followed by classification symbols)
Int.Cl. F02D21/08, F02D45/00, F02M26/74

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-314377 A (NIPPON SOKEN, INC.) 06 November 2003, paragraphs [0008]-[0009], [0044]-[0045], fig. 2-5 (Family: none) | 1-13 |
| Y | JP 2007-253658 A (TOYOTA MOTOR CORP.) 04 October 2007, paragraphs [0002]-[0004], [0038] (Family: none) | 1-13 |
| Y | JP 8-165959 A (NISSAN MOTOR CO., LTD.) 25 June 1996, paragraph [0004] (Family: none) | 2-7, 9-13 |

☐ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 November 2017 (28.11.2017) | 12 December 2017 (12.12.2017) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003314377 A